# FASCICULE DE BREVET EUROPEEN

(11) **EP 3 177 138 B1**
(45) Date de publication et mention de la délivrance du brevet: **16.12.2020**
(21) Numéro de dépôt: 15767205.6
(22) Date de dépôt: 07.08.2015
(51) Int. Cl.: A01M 1/02, A01M 1/06

(54) **APPAREIL ET PROCEDE POUR PRENDRE AU PIEGE DES INSECTES VOLANTS NUISIBLES**
VORRICHTUNG UND VERFAHREN ZUM EINFANGEN FLIEGENDER INSEKTENSCHÄDLINGE
DEVICE AND METHOD FOR TRAPPING FLYING INSECT PESTS

(30) Priorité: 07.08.2014 FR 1457683
(43) Date de publication de la demande: 14.06.2017
(73) Titulaire: Techno Bam, 13560 Sénas (FR)
(72) Inventeur: LILLAMAND, Simon, 13910 Maillane (FR); BELLAGAMBI, Pierre, 13910 Maillane (FR)
(74) Mandataire: Roman, Alexis
(86) Numéro de dépôt international: PCT/FR2015/052180
(87) Numéro de publication internationale: WO 2016/020627

(56) Documents cités:
- US-A- 5 813 166
- US-A1- 2004 154 213
- US-A1- 2007 006 520
- US-A1- 2009 162 253

## Description

### Domaine technique de l'invention.

L'invention a pour objet un appareil et un procédé pour prendre au piège des insectes volants nuisibles.

Elle concerne le domaine technique des systèmes permettant d'attirer et de capturer des insectes volants nuisibles, en particulier les insectes diptères nématocères (suceurs de sang) et les diptères hématophages (mordeurs).

### État de la technique.

Dans les zones particulièrement exposées à la présence des moustiques, les collectivités dépensent des sommes considérables pour effectuer des traitements préventifs de destruction des larves de moustiques.

Diverses techniques de lutte contre les moustiques existent actuellement :
- la technique larvicide : elle implique l'utilisation de produits chimiques ou biologiques qui agissent sur les moustiques au stade immature pour freiner leur développement. Cette technique est efficace pour freiner le développement des moustiques, car leurs larves occupent en général un espace géographique minimum et facilement localisable. Toutefois, elle est très coûteuse. De plus, l'utilisation fréquente de larvicides peut entrainer un phénomène d'habituation et de résistance au produit utilisé.
- la technique des insecticides : elle vise à éliminer les moustiques adultes avec des substances chimiques synthétiques ou naturelles (par ex. les pyrétroïdes). Toutefois, cette technique engendre des coûts considérables et impliquent une logistique lourde (pulvérisation aérienne ou terrestre). De plus, les substances insecticides peuvent aussi avoir des effets nocifs sur la santé des humains et des animaux. Par ailleurs, leur utilisation répétée présente un risque de résistance.
- la technique des répulsifs : elle vise à détourner les moustiques de leur cible potentielle, en perturbant leurs facultés de repérage avec des substances chimiques synthétiques ou naturelles (par exemple le DEET (N,N-diéthyl-3-méthylbenzamide). Cependant, cette technique ne tue généralement pas les moustiques, mais les repousse de leur proie. De plus, peu d'études de toxicité à long terme ont été réalisées sur les répulsifs disponibles actuellement sur le marché.

Les études environnementales démontrent que tous produits chimiques se dégradent mal et ont tendance à se diffuser dans l'écosystème. En plus d'être nocive pour la faune des zones traitées en impactant la base de la chaîne alimentaire, la démoustication traite uniquement les zones sauvages sans traiter les zones urbanisées où les nuisances sont essentielles et où les risques de prolifération d'infection virale liée aux moustiques sont les plus grands. Les produits chimiques utilisés atteignent et détruisent les prédateurs naturels des moustiques, ce qui a pour effet de réduire sensiblement l'efficacité globale des campagnes de démoustication.

La protection des zones d'habitation situées dans les régions infectées par les moustiques passe donc par la recherche de moyens écologiquement moins agressifs.

On connait des appareils susceptibles de fournir une réponse alternative adaptée, et correspondants à un besoin réel. Ces appareils comprennent généralement : - un dispositif pour diffuser dans l'air ambiant un leurre gazeux dont la composition est adaptée pour attirer les insectes ; - un conduit d'aspiration pour aspirer un flux d'air contenant les insectes attirés par le leurre gazeux diffusé ; - un piège à insectes agencé avec le conduit d'aspiration de sorte que les insectes aspirés par ledit conduit soient retenus dans ledit piège. Ce type d'appareil est une alternative à la démoustication par larvicide.

Plus particulièrement, le document brevet EP 1.049.373 (AMERICAN BIOPHYSICS CORP) décrit un appareil qui inclut un piège à insectes comportant une entrée permettant aux insectes d'y pénétrer et, un système de diffusion de leurre relié à une source de gaz carbonique (CO₂). Ce système de diffusion est disposé de manière à refroidir le CO₂ chaud, et à diffuser un leurre à insecte composé du CO₂ rafraîchi près de l'entrée du piège, à une température supérieure à la température ambiante et inférieure à environ 45°C. En pratique, cet appareil présente une efficacité limitée qui est notamment due à une diffusion continue du leurre.

Le document brevet US 2007/0006520 (DURAND) décrit un appareil similaire. Le leurre est diffusé sous forme de brouillard. Ce brouillard est diffusé de manière séquencée pour simuler la respiration d'un mammifère à son endroit. Attirés par le leurre, les insectes sont ensuite aspirés et emprisonnés.

Cet appareil est plus efficace que celui décrit précédemment. Il présente toutefois plusieurs inconvénients. En effet, la génération du brouillard est particulièrement complexe et délicate à mettre en œuvre. Également, étant donné que le conduit d'aspiration est dans le prolongement direct du conduit d'éjection du leurre, une partie de ce dernier est repris dans le flux d'air aspiré. Cela contribue à diminuer l'efficacité générale du système, le rayon d'action du leurre étant limité. US 5 813 166 A divulgue un autre appareil du type piège a insectes volants.

L'invention vise à remédier à cet état des choses. En particulier, un objectif de l'invention est de diffuser de manière plus simple et plus efficace le leurre dans l'air environnant, de manière à améliorer la capture des insectes.

Un autre objectif de l'invention de proposer un appareil dont le rayon d'action est supérieur à ceux des appareils précités connus de l'art antérieur.

Encore un autre objectif de l'invention de proposer un appareil de conception simple, peu onéreuse, facile à utiliser, et facilement manipulable.

### Divulgation de l'invention.

La solution proposée par l'invention est un appareil pour prendre au piège des insectes volants nuisibles selon la revendication 1.

En pratique, ce dispositif de diffusion du leurre est particulièrement efficace et simple à réaliser. En étant expiré, le flux d'air se charge rapidement et efficacement du leurre concentré dans la chambre creuse, lequel leurre se mêle de manière homogène dans ledit flux. Il en découle une diffusion plus efficace du leurre, et une meilleure captation des insectes.

D'autres caractéristiques avantageuses de l'invention sont listées ci-dessous. Chacune de ces caractéristiques peut être considérée seule ou en combinaison avec les caractéristiques remarquables définies ci-dessus, et peuvent faire l'objet, le cas échéant, de demandes de brevet divisionnaires :
- Le flux d'air expiré chargé en leurre gazeux est préférentiellement diffusé dans une direction qui est différente de celle du flux d'air ambiant environnant aspiré par le dispositif d'aspiration.
- Avantageusement : le dispositif d'aspiration comprend un conduit d'aspiration présentant une entrée par laquelle sont aspirés les insectes ; - la chambre creuse est disposée au dessus de cette entrée.
- une structure chapeau surmonte avantageusement l'entrée du conduit d'aspiration, laquelle structure est adaptée pour former une barrière physique qui empêche le flux d'air expiré chargé en leurre gazeux, d'être repris dans le flux d'air aspiré par le dispositif d'aspiration.
- La chambre creuse et l'entrée sont préférentiellement situées à une distance inférieure ou égale à 3 m, de préférence comprise entre 1 m et 3 m du sol sur lequel repose ledit appareil.
- Le conduit d'aspiration aspire préférentiellement de manière continue le flux d'air ambiant environnant contenant les insectes attirés par le leurre gazeux diffusé.
- le débit d'un flux d'air ambiant environnant aspiré par le dispositif d'aspiration est supérieur au débit du flux d'air chargé en leurre gazeux qui est expiré de la chambre creuse.
- Le leurre gazeux est préférentiellement constitué d'un mélange de gaz carbonique et de phéromones volatiles.
- Les phéromones peuvent être contenues ou imprégnées dans un support de phéromones, lequel support est placé dans le flux d'air généré dans la chambre creuse de manière à ce que lesdites phéromones s'évaporent au passage dudit flux.
- De préférence, les phéromones sont utilisées à l'état liquide pour imprégner le support de phéromones, ledit support étant poreux.
- Une source de gaz carbonique peut être adaptée pour diffuser de manière continue du gaz carbonique dans la chambre creuse.
- La chambre creuse peut-être formée par, ou contenir, un matériau réfractaire adapté pour emmagasiner de la chaleur et la restituer au flux d'air généré dans ladite chambre.
- Ledit appareil peut en outre comporter une carte électronique adaptée pour assurer son fonctionnement autonome ou programmée.

Un autre aspect de l'invention concerne un procédé pour prendre au piège des insectes volants nuisibles selon la revendication 13.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 est une vue schématique en coupe d'un appareil conforme à l'invention ;
- la figure 2 montre en détail un exemple de réalisation de la chambre creuse dans laquelle est dispensé le leurre.

### Modes préférés de réalisation de l'invention.

L'appareil objet de l'invention est destiné à piéger les insectes diptères nématocères (suceurs de sang) tels que les moustiques et les insectes diptères hématophages (mordeurs de leur proie) tels que les Simulies. Le principe consiste à simuler la présence et la respiration d'un mammifère en son endroit. De manière plus générale l'invention vise à prendre au piège des insectes volants nuisibles. Attirés par un leurre, les insectes ciblés sont ensuite aspirés et capturés. Ainsi emprisonnés, les insectes peuvent être soient tués soient récupérés vivants, par exemple pour une étude scientifique ultérieure.

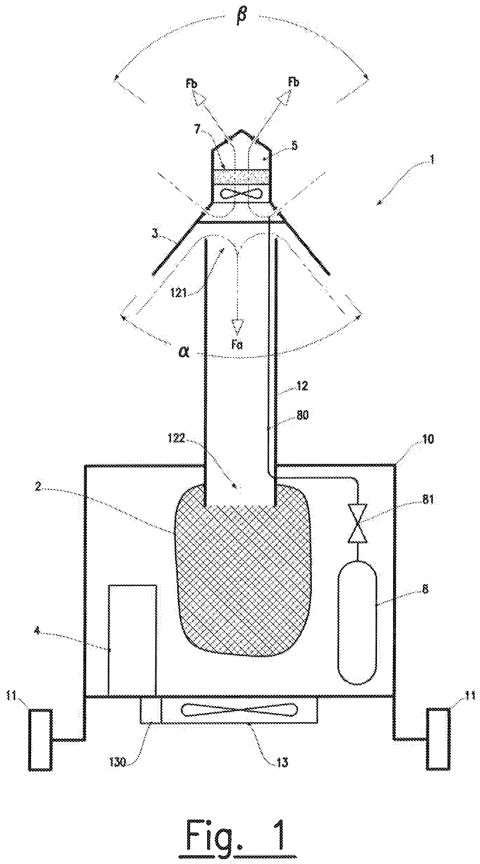

Sur la figure 1, l'appareil 1 comprend une structure châssis 10 qui peut être fixée au sol ou être pourvue de roues 11 de manière à la rendre mobile et/ou déplaçable.

Selon une variante de l'invention, on peut aussi prévoir que la structure châssis 10 soit enterrée dans le sol.

Le châssis 10 peut être réalisé en acier (ex : inox), en béton ou en plastique (ex : PVC). Il peut avoir une forme parallélépipédique ou cylindrique. Sa hauteur varie par exemple de 10 cm à 1,50 m. Sa longueur et/ou largeur varie par exemple de 10 cm à 50 cm.

Sur la figure 1, le châssis 10 se présente sous la forme d'une boîte fermée hermétiquement. Une trappe et/ou une porte montée mobile entre une position ouverte et une position fermée, est avantageusement prévue pour autoriser un accès à l'intérieur dudit châssis.

L'appareil 1 est autonome. Il est préférentiellement alimenté électriquement grâce à une batterie 4 couplée à un ou plusieurs panneaux solaires et/ou une éolienne. Elle peut également être rechargée simplement en la connectant à une alimentation électrique du type secteur. Cette batterie 4 est avantageusement insérée dans le châssis 10. La batterie 4 peut être couplée à une temporisation réglée de manière à désactiver l'appareil 1 durant des périodes où les insectes sont peu actifs, par exemple de minuit à 4 heures du matin.

Bien entendu, on peut aussi prévoir de coupler l'appareil 1, incluant la batterie 4, au réseau d'éclairage public. Dans ce cas, l'appareil 1 fonctionne, pendant les périodes d'éclairage, grâce au réseau de distribution d'électricité, et en dehors de ces périodes, grâce à la batterie 4. Celle-ci étant adaptée à se recharger pendant les périodes d'éclairage.

Le châssis 10 est surmonté d'un mât à l'extrémité duquel sont disposés le dispositif d'aspiration et le dispositif de diffusion du leurre décrit plus avant dans la description. De manière avantageuse, et pour assurer une meilleure visibilité par les insectes nuisibles ciblés, ces deux dispositifs sont situés en hauteur

Sur la figure 1, le mât se présente sous la forme d'un tube rectiligne formant un conduit d'aspiration 12. Celui-ci peut être réalisé en métal (ex : inox) ou en plastique (ex : PVC). Sur les figures annexées, les extrémités supérieures 121 et inférieures 122 sont ouvertes. On pourrait toutefois prévoir d'avoir une extrémité supérieure 121 borgne, au moins un orifice d'aspiration étant toutefois prévu au niveau de cette extrémité.

L'extrémité inférieure 122 du conduit 12 est fixée au châssis 10, par soudage, par vissage, ou par une solution d'encliquetage. Ce conduit 12 peut-être de section circulaire, ovale, rectangulaire, etc. Il peut être réalisé en une seule pièce, ou en plusieurs pièces, par exemple emboîtées les unes dans les autres. Cette dernière solution permet d'ajuster très simplement la longueur du conduit 12. Son diamètre peut être compris entre 5 cm et 20 cm. Sa longueur peut varier de 1 cm à 1,50 m, préférentiellement de 50 cm à 1,50 m.

L'extrémité inférieure 122 du conduit 12 débouche dans un piège à insectes 2. Celui-ci se présente sous la forme d'un sac souple en maille, ou filet. Il est attaché, par exemple au moyen d'un cordon de serrage, à l'extrémité inférieure 122.

Ce filet 2 est avantageusement réutilisable, et peut-être récupéré et changé au moyen de la porte précitée prévue dans le châssis 10. Il peut être éventuellement imprégné d'un poison pour tuer les insectes piégés. En tout état de cause, même en l'absence de poison, ces derniers mourront de déshydratation et/ou de faim. Le filet 2 peut être associé à un capteur permettant d'indiquer son remplissage.

Le châssis 10 est associé à un moyen d'aspiration 13, se présentant préférentiellement sous la forme d'un ventilateur. Ce moyen d'aspiration 13 est adapté pour aspirer l'air ambiant selon un débit compris entre 15 m³/H et 500 m³/H, préférentiellement environ 350 m³/H. Il crée une dépression dans le châssis 10 et aspire l'air ambiant environnant par l'entrée 121 du conduit 12, à travers le filet 2. Le flux d'air ambiant aspiré est schématisé par la flèche référencée Fa sur les figures annexées. En pratique, le ventilateur 13 comprend un moteur qui tire un signal de puissance électrique de la batterie 4 pour faire tourner ses pales, générant ainsi le flux Fa. Le ventilateur 13 est couplé à un organe de commande 130 permettant de contrôler son fonctionnement.

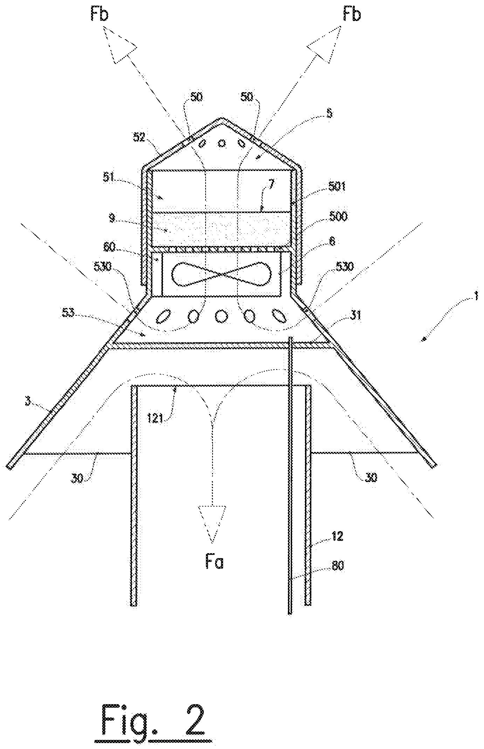

Sur les figures 1 et 2, l'entrée 121 du conduit 12 est surmontée d'une structure chapeau en cône 3. Celle-ci est réalisée en plastique (ex : PVC) ou en tôle pliée (ex : inox). Elle est rapportée au niveau de l'entrée 121, et maintenue en position au moyen de pattes d'accrochage 30, ou par tout autre organe d'attache similaire convenant à l'homme du métier.

Cette structure chapeau 3 a plusieurs fonctions : elle protège l'entrée 121 des intempéries, empêchant notamment l'eau de pluie de pénétrer à l'intérieur du conduit 12 ; elle permet en outre de canaliser le flux d'air Fa aspiré, ce dernier circulant du bas de l'appareil 1 vers le haut du conduit 12 ; elle forme également une barrière physique qui empêche le leurre diffusé d'être repris dans le conduit d'aspiration 12.

Plus particulièrement, la structure 3 est adaptée pour que le flux Fa soit aspiré selon un angle solide α compris entre 20° et 90° ; préférentiellement entre 20° et 60°.

L'appareil 1 comprend également un dispositif pour diffuser, dans l'air ambiant environnant, un leurre gazeux dont la composition est adaptée pour attirer les insectes. Sur les figures annexées, ce diffuseur est coaxial à l'entrée 121.

Ce dispositif de diffusion comprend une chambre creuse 5. Celle-ci est située au-dessus du conduit d'aspiration 12, et notamment au-dessus de l'entrée 121. Plus particulièrement, cette chambre creuse 5 est située à l'extrémité supérieure de la structure chapeau 3. Elle présente des orifices 50 débouchant à l'air ambiant environnant. Ces orifices 50 sont disposés de manière homogène tout autour de la chambre 5.

En se rapportant plus particulièrement à la figure 2, la chambre 5 comprend une cuve 51 surmontée d'un dôme, ou couvercle 52. Celui-ci est préférentiellement amovible de manière à autoriser un accès facile à l'intérieur de la cuve 51. Ces deux pièces 51, 52 sont réalisées en plastique (ex : PVC) ou en métal (ex : inox).

La cuve 51 a une forme cylindrique, ou parallélépipédique, et s'étend verticalement vers le haut de l'appareil 1. Elle présente un fond 500 et des parois latérales 501. Elle est réalisée dans le prolongement de la structure 3, et peut être obtenue lors de l'emboutissage ou du moulage de cette dernière. Son diamètre correspond sensiblement à celui du conduit 12. Sa hauteur varie par exemple de 2 cm à 20 cm. Le couvercle 52 a une forme complémentaire à celle de la cuve 1, de manière à pouvoir s'emboîter sur les parois latérales 501 de celle-ci. Sur les figures annexées, le couvercle 52 a une forme conique, mais pourrait être de toute autre forme convenant à l'homme du métier, par exemple hémisphérique, ou cylindrique. Les orifices 50 sont réalisés sur le couvercle 52.

La cuve 51 est associée à un moyen 6 pour générer un flux d'air dans la chambre 5. Ce moyen 6 se présente préférentiellement sous la forme d'un ventilateur. Il est adapté pour expirer un flux d'air selon un débit compris entre 10 m³/H et 300 m³/H, préférentiellement environ 150 m³/H. Il aspire l'air ambiant depuis des orifices 530 réalisés sur la structure 3, sous la cuve 51. Une cloison étanche 31 est montée dans la structure 3 de manière à séparer ces orifices 530 de l'entrée 121 du conduit 12. Cette cloison 31 évite que le flux d'air aspiré par le ventilateur 6 soit repris dans le flux d'air Fa aspiré par l'entrée 121 du conduit 12. La cloison 31, les parois de la structure 3 et le fond 500 de la cuve 51, délimite une chambre intermédiaire 53, située sous la cuve 51, et dans laquelle sont réalisés les orifices 530. Cette chambre intermédiaire 53 est une sous-chambre de la chambre creuse 5. Le flux d'air aspiré par le ventilateur 6 passe donc à l'intérieur de la chambre intermédiaire 53, par les orifices 530, et est rejeté dans la chambre 5, de laquelle il ressort par les orifices 50. Sur les figures annexées, le flux d'air ainsi expiré est schématisé par la flèche référencée Fb. Les orifices 50 sont orientés tout autour de la chambre 5 et orientés de manière à ce que le flux Fb soit expiré selon un angle solide β compris entre 20° et 90° ; préférentiellement entre 20° et 60°.

En pratique, le ventilateur 6 comprend un moteur qui tire un signe de puissance électrique de la batterie 4 pour faire tourner ses pales générant ainsi le flux Fb. Le ventilateur 6 est couplé à un organe de contrôle 60 permettant de le faire fonctionner de manière séquencée. Cet organe de contrôle 60 se présente par exemple sous la forme d'un circuit imprimé intégrant une temporisation.

Un dispositif est prévu pour dispenser un leurre gazeux à l'intérieur de la chambre creuse 5. Le leurre gazeux utilisé est préférentiellement un mélange de CO₂ et de phéromones volatiles. Le CO₂ induit sur les insectes une stimulation nerveuse similaire à celle produite par la respiration d'un mammifère à sang chaud. Les phéromones utilisées reproduisent avantageusement l'odeur de la peau humaine. On utilise par exemple de l'octénol (C₈H₁₆O), en particulier le 1-octén-3-ol (CAS # 3391-86-4), et/ou de l'acide lactique, ces phéromones donnant de bons résultats. Ces composés évitent également d'attirer des insectes volants non nuisibles tels que des abeilles.

Sur la figure 1, le châssis 10 renferme une source 8 de CO₂. Cette dernière se présente par exemple sous la forme d'une bonbonne rechargeable sous pression, dont la contenance est par exemple comprise entre 0,5 Kg et 50 Kg. Un conduit 80 met en communication fluidique la bonbonne 8 et la chambre creuse 5, et plus particulièrement la chambre intermédiaire 53. Le CO₂ se mélange de fait au flux d'air Fb qui est aspiré par le ventilateur 6. Le conduit 80 peut passer à l'intérieur du conduit 12 ou à l'extérieur. Un débitmètre 81 permet de régler le débit de CO₂ injecté dans la chambre intermédiaire 53. De très bons résultats sont obtenus lorsque ce débit est compris entre 0,15 L/min et 0,5 L/min. Selon une caractéristique avantageuse de l'invention, le CO₂ est diffusé de manière continue dans la chambre creuse 5, et plus particulièrement dans la chambre intermédiaire 53. Même lorsque le ventilateur 6 est inactif, le CO₂ se diffuse dans la cuve 51 en passant au travers des pales dudit ventilateur. La bonbonne 8 peut être associée à un capteur permettant d'avertir un opérateur lorsqu'il est vide.

Les insectes sont d'autant plus attirés par le CO₂ que la température de ce dernier est supérieure à la température de l'air ambiant environnant. Il peut donc être avantageux de chauffer préalablement le CO₂ avant sa diffusion. Ce chauffage est induit naturellement par les rayons incidents du soleil qui chauffent la chambre creuse 5. Pour amplifier ce phénomène naturel, la chambre creuse 5 peut être formée par, ou contenir, un matériau réfractaire (plaques d'acier, pierre de lave,...) adapté pour emmagasiner la chaleur et la restituer au flux d'air Fb, et donc au CO₂.

Sur la figure 2, les phéromones sont disposées dans une cartouche amovible 9, laquelle cartouche est placée dans la cuve 51, au-dessus du ventilateur 6. Lorsque la cartouche 9 est vide, il suffit d'ôter le couvercle 52 pour l'enlever et la remplacer par une autre. La cartouche 9 peut être associée à un capteur permettant d'avertir un opérateur lorsqu'elle est vide.

En pratique, les phéromones sont contenues ou imprégnées dans un support de phéromones qui est placé dans le flux d'air généré dans la chambre creuse 5, par le ventilateur 6.

Ce support de phéromones est de préférence choisi parmi (i) une bougie ; (ii) un support poreux tel que des billes en matériau polymère par exemple en Pebax® et les mèches, en tissu ou en bois, exploitant l'effet de capillarité; (iii) un support sous forme de gel ; et (iv) une plaquette en matière absorbante plus ou moins spongieuse. De bons résultats sont obtenus, lorsque le support de phéromones est poreux et lorsque les phéromones sont utilisées à l'état liquide.

Au passage de ce flux d'air Fb généré par le ventilateur 6, les phéromones s'évaporent. Elles se diffusent toutefois de manière continue dans la chambre creuse 5, même en l'absence de ce flux d'air Fb. Cela est essentiellement dû au fait que la chambre creuse 5 est chauffée par les rayons incidents du soleil, la température régnant à l'intérieur de la cuve 51 provoquant une évaporation continue les phéromones à l'intérieur de ladite chambre.

Le fonctionnement de l'appareil 1 ainsi que la technique de capture vont maintenant être décrits plus en détail. Conformément à l'invention, tout ou partie du leurre gazeux est dispensé en continu à l'intérieur de la chambre creuse 5. Ce leurre gazeux est ensuite expulsé de manière séquencée dans l'air ambiant environnant.

Au moins les phéromones, et préférentiellement le CO₂, sont dispensées en continu à l'intérieur de la chambre creuse 5. Cette dernière se charge donc en leurre gazeux. Les inventeurs ont pu démontrer qu'un débit de phéromones compris entre 0,3 ml/jour et 3 ml/jour contribue à améliorer les propriétés attractives du leurre.

Lorsque le ventilateur 6 est actionné, le flux d'air Fb qu'il génère permet d'expulser le leurre gazeux hors de la chambre 5, par les orifices 50. Ce flux d'air Fb se mélange intimement avec le leurre gazeux concentré à l'intérieur de la chambre creuse 5. Les inventeurs ont pu constater de manière surprenante que les propriétés attractives de ce mélange parfaitement homogénéisé étaient nettement améliorées par rapport aux leurres diffusés selon les techniques décrites dans les demandes de brevets précités.

Pour obtenir une concentration maximale de leurre à l'intérieur de la chambre 5, les orifices 50 peuvent être équipés d'éléments obturateurs. Ces éléments sont amovibles, et montés mobiles entre : - position d'obturation où ils ferment les orifices 50 ; - et une position d'ouverture où ils libèrent lesdits orifices. Le mécanisme permettant de manoeuvrer ces éléments obturateurs et synchroniser avec le moyen 6 de sorte que lesdits éléments passent de la position d'obturation à la position d'ouverture lorsque le flux d'air Fb est généré dans la chambre 5.

Le flux d'air Fb, chargé en leurre, est expulsé de manière séquencée pour simuler l'expiration d'une proie potentielle des insectes volants nuisibles à éliminer. Le rythme de ces expirations excite les capteurs de tous les diptères et permet ainsi de capturer également les hématophages. Le leurre est donc expulsé dans l'atmosphère par alternance, selon une période qui est prédéterminée. Les phases d'expiration durent entre 2 s et 15 s, et sont entrecoupées de phase de repos dont la durée est comprise entre 2 s et 1 min. De telles cadences donnent de très bons résultats.

Les insectes, attirés par ce stimulus, cherchent instinctivement à atteindre la zone où le leurre à une concentration maximale, c'est-à-dire la chambre creuse 5. En pratique, les insectes volent au niveau du sol, à une hauteur qui ne dépasse pas 50 cm. Arrivés à proximité de la source du leurre, ils se dirigent quasi à la verticale vers la chambre 5. Dans le cadre de l'invention, ils remontent le long du conduit 12.

Le ventilateur 13 fonctionne sans interruption de sorte que le conduit 12 aspire de manière continue le flux d'air Fa. Lorsque, pour atteindre la chambre 5, les insectes attirés par le leurre gazeux diffusé dans l'air ambiant environnant, volent à proximité de l'entrée 121, ils sont aspirés dans le conduit 12 puis retenus dans le piège 2.

On comprend dès lors l'intérêt de faire d'abord passer tous les insectes dans le flux d'air aspiré Fa, avant qu'ils atteignent la source du leurre. Cette nouvelle tactique de capture est donc différente de celle décrite dans les documents brevets précités, puisque dans ces derniers, les insectes atteignent d'abord la source du leurre avant d'être aspirés. Cette tactique de l'art antérieur ne permet pas d'obtenir des résultats optimums dans la mesure où certains insectes peuvent atteindre la source du leurre et repartir sans avoir été aspirés.

En outre, le fait d'installer la chambre creuse 5 et l'entrée 121 en hauteur, à une distance du sol avantageusement inférieure ou égale à 3 m, de préférence comprise entre 1 m et 3 m, ou entre 0 et 2 m ; préférentiellement égale à 2 m, rend le piège mieux visible par les insectes nuisibles ciblés. Au contraire, dans les documents brevets précités, le dispositif d'aspiration et le dispositif de diffusion du leurre sont proches du sol. Ces pièges sont donc peu visibles par les insectes, limitant de fait leur rayon d'action. Cette visibilité est d'autant plus réduite que des petits obstacles, tels des haies, sont susceptibles de cacher l'appareil.

On a vu précédemment que la structure 3 forme une barrière physique qui empêche le flux d'air Fb expiré, chargé en leurre gazeux, d'être repris dans le flux d'air aspiré Fa. Pour diminuer encore plus ce phénomène de reprise, on prévoit de diffuser le flux d'air Fb dans une direction qui est différente de celle du flux d'air aspiré Fa. Les directions de ces deux flux Fa, Fb peuvent être opposées. Elles peuvent être également décalées angulairement de 20° à 90°. C'est la raison pour laquelle la chambre creuse 5 est disposée au-dessus de l'entrée 121 du conduit d'aspiration 12, et que les orifices 50 sont orientés vers le haut de l'appareil 1. Le leurre gazeux peut ainsi se répandre sur une large zone, notamment sur un rayon d'action d'environ 50 m à 60 m, correspondant à une surface d'environ 10000 m².

En outre, le fait de diffuser le leurre dans une direction opposée au flux d'air aspiré par le conduit 12, offre la possibilité d'avoir des débits des flux d'air Fa et Fb différents. En effet, pour capturer davantage d'insectes, il apparaît avantageux que le flux d'air Fa aspiré par le conduit 12 soit supérieur au flux d'air Fb expiré de la chambre creuse 5.

En disposant une pluralité de ces appareils 1 à des endroits judicieusement choisis, la technique de capture conforme à l'invention est donc particulièrement adaptée pour former une ceinture de protection autour d'une petite communauté urbaine ou encore un espace public ouvert, permettant ainsi de les préserver des nuisances dues aux insectes nuisibles ciblés. Bien entendu, l'alimentation en CO₂ peut être propre à chaque appareil 1 ou être commune à plusieurs appareils 1.

Selon une variante préférée de l'invention, l'appareil 1 (ou chacun des appareils 1) peut comporter une carte électronique adaptée pour assurer son fonctionnement autonome ou programmée. Cette carte électronique peut par exemple :
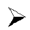 commander les plages de fonctionnement de l'appareil 1 (ou chacun des appareils 1),
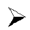 et/ou basculer l'alimentation électrique de l'appareil entre la batterie et un réseau de distribution électrique,
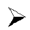 et/ou recevoir un signal électronique incluant des données atmosphériques en relation avec l'environnement dans lequel se trouve l'appareil 1 ; traiter ce signal électronique ; et commander l'interruption du fonctionnement de l'appareil 1 lorsque le signal électronique inclut des données atmosphériques qui ne sont pas favorables à la prise au piège des insectes volant nuisibles, Les données atmosphériques en question peuvent être la température externe, le taux d'humidité externe, la pression atmosphérique, la vitesse du vent, et autres. Ces données peuvent être directement issues de capteurs placés à l'extérieur l'appareil 1 ou provenir de stations météorologiques locales, ou régionales,
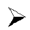 et/ou permettre aux appareils 1 de communiquer entre eux,
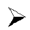 et/ou gérer à distance le fonctionnement du ou des appareils 1, par exemple à l'aide de moyens de communication sans fil du type WIFI ou 3G ou autre,
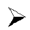 et/ou remonter des messages de dysfonctionnement de l'appareil 1, en vue d'une gestion rapide des éventuels dysfonctionnements.

On peut également concevoir un appareil 1 plus petit et/ou plus compact, particulièrement destiné à l'usage de particulier, et par exemple destiné à être posé au sol, sur une table, ou accroché à un arbre. Dans ce cas, on comprend qu'il n'est pas nécessaire de positionner le diffuseur de leurre et le dispositif d'aspiration en haut d'un mât ou, à tout le moins, que ce mât peut être de taille plus réduite.

L'agencement des différents éléments et/ou moyens et/ou étapes de l'invention, dans les modes de réalisation décrits ci-dessus, ne doit pas être compris comme exigeant un tel agencement dans toutes les implémentations. En tout état de cause, on comprendra que diverses modifications peuvent être apportées à ces éléments et/ou moyens et/ou étapes, sans s'écarter de l'esprit et de la portée de l'invention. En particulier :
- Le châssis 10 n'est pas forcément de forme parallélépipédique ou cylindrique. Il peut être de toute autre forme convenant à l'homme du métier.
- Le châssis 10 peut être monté sur un trépied. Il peut encore être pourvu d'un moyen d'accrochage du type permettant de le suspendre à un arbre, ou de le fixer sur un support mural ou sur une barrière.
- On peut prévoir de brancher l'appareil 1 sur une prise du secteur.
- Le conduit aspiration 12 n'est pas forcément rectiligne, mais peut présenter une ou plusieurs portions courbes.
- Le moyen d'aspiration 13 peut se présenter sous la forme d'une pompe à vide.
- Le moyen 6 pour générer le flux d'air Fb peut se présenter sous la forme d'un soufflé actionné mécaniquement, ou sous la forme d'une pompe.
- La structure chapeau 3 n'est pas nécessairement conique, et peut par exemple être cylindrique, à la manière d'un abat-jour.
- La chambre creuse 5 peut ne présenter qu'un seul orifice 50.
- Le conduit 80 peut déboucher directement dans la cuve 51.
- Le CO₂ peut être diffusé de manière séquencée dans la chambre creuse 5, par exemple selon la même fréquence que le fonctionnement du ventilateur 6.
- Les phéromones peuvent être utilisées sous forme de gaz.
- Une résistance électrique peut être prévue pour chauffer l'intérieur de la chambre creuse 5 et le cas échéant, le matériau réfractaire qu'elle contient.

## Revendications

1. Appareil pour prendre au piège des insectes volants nuisibles comprenant :
- un dispositif pour diffuser dans l'air ambiant environnant un leurre gazeux dont la composition est adaptée pour attirer les insectes, lequel dispositif de diffusion comprend une chambre creuse (5) destinée à être dispensée en leurre gazeux, et un dispositif (7, 8) pour dispenser le leurre gazeux à l'intérieur de ladite chambre creuse (5),
- un dispositif (12, 13) pour aspirer un flux d'air ambiant environnant (Fa) contenant les insectes attirés par le leurre gazeux diffusé, ladite chambre creuse (5) étant située au-dessus du dispositif d'aspiration (12,13) et séparée de lui par une structure chapeau (3),
- un piège (2) à insectes agencé avec le dispositif d'aspiration (12, 13) de sorte que les insectes aspirés par ledit dispositif soient retenus dans ledit piège,
**se caractérisant par le fait que** :
- ladite chambre creuse (5) comporte une cuve (51) surmontée d'un dôme ou couvercle (52) ayant au moins un orifice (50) débouchant à l'air ambiant environnant, ladite cuve (51) étant associée à un dispositif (6) pour générer un flux d'air (Fb) dans ladite chambre creuse (5), lequel dispositif (6) est adapté pour aspirer l'air ambiant depuis des orifices (530) réalisés au-dessous de ladite cuve (51) dans ladite structure (3) et expulser le leurre gazeux hors de ladite chambre (5), par ledit orifice (50),
- ledit flux d'air (Fb) est généré de manière séquencée,
- au moins une partie des composés du leurre est dispensée de manière continue dans ladite chambre (5).

2. Appareil selon la revendication 1, dans lequel le flux d'air expiré (Fb) chargé en leurre gazeux est diffusé dans une direction qui est différente de celle du flux d'air ambiant environnant (Fa) aspiré par le dispositif d'aspiration (12, 13).

3. Appareil selon l'unes des revendications précédentes, dans lequel :
- le dispositif d'aspiration (12, 13) comprend un conduit d'aspiration (12) présentant une entrée (121) par laquelle sont aspirés les insectes,
- la chambre creuse (5) est disposée au dessus de cette entrée (121).

4. Appareil selon la revendication 3, dans lequel la chambre creuse (5) et l'entrée (121) sont situés à une distance inférieure à 3 m, préférentiellement à une distance comprise entre 1 m et 3 m du sol sur lequel repose ledit appareil.

5. Appareil selon l'une des revendications précédentes, dans lequel le dispositif d'aspiration (12, 13) aspire de manière continue le flux d'air ambiant environnant (Fa) contenant les insectes attirés par le leurre gazeux diffusé.

6. Appareil selon l'une des revendications précédentes, dans lequel le débit d'un flux d'air (Fa) ambiant environnant aspiré par le dispositif d'aspiration (12, 13) est supérieur au débit du flux d'air (Fb) chargé en leurre gazeux qui est expiré de la chambre creuse (5).

7. Appareil selon l'une des revendications précédentes, dans lequel le leurre gazeux est constitué d'un mélange de gaz carbonique et de phéromones volatiles.

8. Appareil selon la revendication 7, dans lequel les phéromones sont contenues ou imprégnées dans un support de phéromones, lequel support est placé dans le flux d'air (Fb) généré dans la chambre creuse (5) de manière à ce que lesdites phéromones s'évaporent au passage dudit flux.

9. Appareil selon la revendication 8, dans lequel les phéromones sont utilisées à l'état liquide pour imprégner le support de phéromones, ledit support étant poreux.

10. Appareil selon l'une des revendications 7 à 10, dans lequel une source de gaz carbonique (8) est adaptée pour diffuser de manière continue du gaz carbonique dans la chambre creuse (5).

11. Appareil selon l'une des revendications précédentes, dans lequel la chambre creuse (5) est formée par, ou contient, un matériau réfractaire adapté pour emmagasiner de la chaleur et la restituer au flux d'air (Fb) généré dans ladite chambre.

12. Appareil selon l'une des revendications précédentes, comportant une carte électronique adaptée pour assurer son fonctionnement autonome ou programmée.

13. Procédé pour prendre au piège des insectes volants nuisibles, en utilisant un appareil selon l'une des revendications 1 à 12, ledit procédé comporte les étapes consistant à :
- au moyen du dispositif de diffusion, diffuser dans l'air ambiant environnant un leurre gazeux dont la composition est adaptée pour attirer les insectes,
- au moyen du dispositif d'aspiration (12,13), aspirer un flux d'air ambiant environnant (Fa) contenant les insectes attirés par le leurre gazeux diffusé,
- retenir dans le piège (2) les insectes aspirés au moyen dudit dispositif d'aspiration (12,13),
**se caractérisant par le fait que** ledit procédé comprend en outre les étapes consistant à :
- au moyen du dispositif (7, 8), dispenser, de manière continue, tout ou partie du leurre gazeux à l'intérieur de la chambre creuse (5),
- au moyen d'un dispositif (6), générer de manière séquencée un flux d'air (Fb) dans la chambre creuse (5) pour expulser le leurre gazeux hors de ladite chambre, dans l'air ambiant environnant.

## Patentansprüche

1. Vorrichtung zum Einfangen fliegender Insektenschädlinge, umfassend:
- eine Einrichtung zur Verteilung eines gasförmigen Lockstoffs, dessen Zusammensetzung geeignet ist, Insekten anzulocken, in der Umgebungsluft, wobei die Verteilungseinrichtung eine Hohlkammer (5) umfasst, die dazu bestimmt ist, mit gasförmigem Lockstoff verabreicht zu werden, und eine Einrichtung (7, 8) zur Abgabe des gasförmigen Lockstoffs innerhalb der Hohlkammer (5),
- eine Einrichtung (12, 13) zum Ansaugen eines umgebenden Umgebungsluftstroms (Fa), der die Insekten enthält, die von dem verteilten gasförmigen Lockstoff angelockt werden, wobei sich die Hohlkammer (5) oberhalb der Ansaugeinrichtung (12, 13) befindet und durch eine Hutstruktur (3) davon getrennt ist,
- eine Insektenfalle (2), die so mit der Ansaugeinrichtung (12, 13) angeordnet ist, dass die Insekten, die von der Einrichtung angesaugt werden, in der Falle zurückgehalten werden,
**dadurch gekennzeichnet, dass:**
- die Hohlkammer (5) ein Gefäß (51) aufweist, das von einer Kuppel oder einem Deckel (52) mit mindestens einer Öffnung (50) überragt wird, die zur umgebenden Umgebungsluft führt, wobei das Gefäß (51) mit einer Einrichtung (6) zur Erzeugung eines Luftstroms (Fb) in der Hohlkammer (5) in Verbindung steht, wobei die Einrichtung (6) geeignet ist, die Umgebungsluft aus den Öffnungen (530) anzusaugen, die unter dem Gefäß (51) in der Struktur (3) ausgebildet sind, und den gasförmigen Lockstoff durch die Öffnung (50) aus der Kammer (5) auszustoßen,
- der Luftstrom (Fb) sequentiell erzeugt wird,
- wenigstens ein Anteil der Bestandteile des Lockstoffs kontinuierlich in der Kammer (5) abgegeben wird.

2. Vorrichtung nach Anspruch 1, wobei der ausgestoßene Luftstrom (Fb), der mit gasförmigem Lockstoff aufgeladen ist, in einer Richtung verteilt wird, die sich von jener des umgebenden Umgebungsluftstroms (Fa) unterscheidet, der von der Ansaugeinrichtung (12, 13) angesaugt wird.

3. Vorrichtung nach einem der vorhergehenden Ansprüche, wobei:
- die Ansaugeinrichtung (12, 13) eine Ansaugleitung (12) umfasst, die einen Eintritt (121) aufweist, durch welchen die Insekten angesaugt werden,
- die Hohlkammer (5) oberhalb dieses Eintritts (121) angeordnet ist.

4. Vorrichtung nach Anspruch 3, wobei sich die Hohlkammer (5) und der Eintritt (121) in einem Abstand unter 3 m, vorzugsweise in einem Abstand zwischen 1 m und 3 m vom Boden befinden, auf dem die Vorrichtung steht.

5. Vorrichtung nach einem der vorhergehenden Ansprüche, wobei die Ansaugeinrichtung (12, 13) den umgebenden Umgebungsluftstrom (Fa), der die Insekten enthält, die von dem verteilten gasförmigen Lockstoff angelockt werden, kontinuierlich ansaugt.

6. Vorrichtung nach einem der vorhergehenden Ansprüche, wobei der Durchsatz eines umgebenden Umgebungsluftstroms (Fa), der von der Ansaugeinrichtung (12, 13) angesaugt wird, größer als der Durchsatz des Luftstroms (Fb) ist, der mit gasförmigem Lockstoff aufgeladen ist, der aus der Hohlkammer (5) ausgestoßen wird.

7. Vorrichtung nach einem der vorhergehenden Ansprüche, wobei der gasförmige Lockstoff von einem Gemisch aus Kohlendioxid und flüchtigen Pheromonen gebildet ist.

8. Vorrichtung nach Anspruch 7, wobei die Pheromone in einem Pheromonträger enthalten oder imprägniert sind, wobei der Träger in dem Luftstrom (Fb) platziert ist, der in der Hohlkammer (5) erzeugt wird, so dass sich die Pheromone beim Durchtritt des Stroms verflüchtigen.

9. Vorrichtung nach Anspruch 8, wobei die Pheromone im flüssigen Zustand verwendet werden, um den Pheromonträger zu imprägnieren, wobei der Träger porös ist.

10. Vorrichtung nach einem der Ansprüche 7 bis 10, wobei eine Kohlendioxidquelle (8) geeignet ist, kontinuierlich Kohlendioxid in der Hohlkammer (5) zu verteilen.

11. Vorrichtung nach einem der vorhergehenden Ansprüche, wobei die Hohlkammer (5) von einem hitzebeständigen Material gebildet ist, das geeignet ist, Wärme zu speichern und sie wieder an den Luftstrom (Fb) abzugeben, der in der Kammer erzeugt wird, oder eins enthält.

12. Vorrichtung nach einem der vorhergehenden Ansprüche, aufweisend eine Platine, die geeignet ist, deren eigenständigen oder programmierten Betrieb sicherzustellen.

13. Verfahren zum Einfangen fliegender Insektenschädlinge mithilfe einer Vorrichtung nach einem der Ansprüche 1 bis 12, wobei das Verfahren die Schritte aufweist, die darin bestehen:
- mittels der Verteilungseinrichtung einen gasförmigen Lockstoff in der umgebenden Umgebungsluft zu verteilen, dessen Zusammensetzung geeignet ist, Insekten anzulocken,
- mittels der Ansaugeinrichtung (12, 13) einen umgebenden Umgebungsluftstrom (Fa) anzusaugen, der die Insekten enthält, die von dem verteilten gasförmigen Lockstoff angelockt werden,
- die Insekten, die mittels der Ansaugeinrichtung (12, 13) angesaugt werden, in der Falle (2) zurückzuhalten,
**dadurch gekennzeichnet, dass** das Verfahren ferner die Schritte umfasst, die darin bestehen:
- mittels der Vorrichtung (7, 8) kontinuierlich den gesamten oder einen Anteil des gasförmigen Lockstoffs innerhalb der Hohlkammer (5) abzugeben,
- mittels einer Vorrichtung (6) sequentiell einen Luftstrom (Fb) in der Hohlkammer (5) zu erzeugen, um den gasförmigen Lockstoff aus der Kammer in die umgebende Umgebungsluft auszustoßen.

## Claims

1. Apparatus for trapping flying insect pests, comprising:
- a device for diffusing into the surrounding ambient air a gaseous bait the composition of which is designed to attract the insects, which diffusion device comprises a hollow chamber (5) intended to be administered with gaseous bait, and a device (7, 8) for dispensing the gaseous bait inside the said hollow chamber (5),
- a device (12, 13) for drawing a flow of surrounding ambient air (Fa) containing the insects attracted by the diffused gaseous bait, the said hollow chamber (5) being situated above the suction device (12, 13) and separated therefrom by a hat structure (3),
- an insect trap (2) arranged with the suction device (12, 13) in such a way that the insects drawn in by the said device are held in the said trap,
**characterized in that**:
- the said hollow chamber (5) comprises a tank (51) surmounted by a dome or cover (52) having at least one orifice (50) opening to the surrounding ambient air, the said tank (51) being associated with a device (6) for generating a flow of air (Fb) in the said hollow chamber (5), which device (6) is designed to draw the ambient air from orifices (530) created below the said tank (51) in the said structure (3) and expel the gaseous bait out of the said chamber (5) via said orifice (50),
- the said flow of air (Fb) is generated in a sequenced manner,
- at least some of the components of the bait are dispensed into the said chamber (5) continuously.

2. Apparatus according to Claim 1, in which the expelled flow of air (Fb) laden with gaseous bait is diffused in a direction which is different from that of the flow of surrounding ambient air (Fa) drawn in by the suction device (12, 13).

3. Apparatus according to one of the preceding claims, in which:
- the suction device (12, 13) comprises an intake duct (12) having an inlet (121) via which the insects are drawn in,
- the hollow chamber (5) is arranged above this inlet (121).

4. Apparatus according to Claim 3, in which the hollow chamber (5) and the inlet (121) are situated at a distance less than 3 m, preferably at a distance of between 1 m and 3 m off the ground on which the said apparatus rests.

5. Apparatus according to one of the preceding claims, in which the suction device (12, 13) continuously draws in the flow of surrounding ambient air (Fa) containing the insects attracted by the diffused gaseous bait.

6. Apparatus according to one of the preceding claims, in which the flow rate of a flow of surrounding ambient air (Fa) drawn in by the suction device (12, 13) is higher than the flow rate of the flow of air (Fb) laden with gaseous bait which is expelled from the hollow chamber (5).

7. Apparatus according to one of the preceding claims, in which the gaseous bait consists of a mixture of carbon dioxide and of volatile pheromones.

8. Apparatus according to Claim 7, in which the pheromones are contained in or impregnated into a pheromones support, which support is positioned in the flow of air (Fb) generated in the hollow chamber (5) so that the said pheromones evaporate as the said flow moves past.

9. Apparatus according to Claim 8, in which the pheromones are used in the liquid state to impregnate the pheromones support, the said support being porous.

10. Apparatus according to one of Claims 7 to 10, in which a source (8) of carbon dioxide is used to continuously diffuse carbon dioxide into the hollow chamber (5).

11. Apparatus according to one of the preceding claims, in which the hollow chamber (5) is formed by, or contains, a refractory material designed to absorb heat and release it to the flow of air (Fb) generated in said chamber.

12. Apparatus according to one of the preceding claims, comprising an electronic board designed to provide autonomous or programmed operation of said apparatus.

13. Method for trapping flying insect pests, by using an apparatus according to one of Claims 1 to 12, the said method comprising the steps consisting in:
- by means of the diffusion device, diffusing into the surrounding ambient air a gaseous bait the composition of which is designed to attract the insects,
- by means of the suction device (12, 13) drawing in a flow of surrounding ambient air (Fa) containing the insects attracted by the diffused gaseous bait,
- holding in the trap (2) the insects that have been drawn in by means of said suction device (12, 13),
**characterized in that** said method further comprises the steps consisting in:
- by means of the device (7, 8), continuously dispensing all or some of the gaseous bait into the hollow chamber (5),
- by means of the device (6), generating in a sequenced manner a flow of air (Fb) into the hollow chamber (5) in order to expel the gaseous bait from the said chamber into the surrounding ambient air.
